# EUROPÄISCHE PATENTANMELDUNG

(11) **EP 2 583 842 A1**
(43) Veröffentlichungstag der Anmeldung: **24.04.2013**
(21) Anmeldenummer: 12181392.7
(22) Anmeldetag: 22.08.2012
(51) Int. Cl.: B60C 23/00

(54) **Landwirtschaftliches Fahrzeug**

(30) Priorität: 21.10.2011 DE 102011085041
(71) Anmelder: DEERE & COMPANY, Moline, Illinois 61265-8098 (US)
(72) Erfinder: Bitter, Marcus, 44267 Dortmund (DE)
(74) Vertreter: Reichert, Christian

(57) **Zusammenfassung**

Es wird ein landwirtschaftliches Fahrzeug (10) mit einer elektro-pneumatischen Reifendruckregelanlage (16) beschrieben. Die Reifendruckregelanlage (16) umfasst eine elektronische Steuereinheit (22) zur Regelung eines Reifendrucks und Mittel zur Ermittlung oder Angabe des Schlupfes zwischen Boden (11) und Reifen (18, 20) des Fahrzeugs (10). Um den Reifendruck automatisiert einzustellen bzw. zu regeln, wird vorgeschlagen, dass in der elektronischen Steuereinheit (22) wenigstens ein Kennfeld (50) abgelegt ist und der Reifendruck anhand des Kennfeldes (50) in Abhängigkeit vom Schlupf regelbar ist.

## Beschreibung

Die Erfindung betrifft ein landwirtschaftliches Fahrzeug mit einer elektro-pneumatischen Reifendruckregelanlage, wobei die Reifendruckregelanlage eine elektronische Steuereinheit zur Regelung eines Reifendrucks und Mittel zur Ermittlung oder Angabe des Schlupfes zwischen Boden und Reifen des Fahrzeugs umfasst.

Es ist bekannt Reifendruckregelanlagen an landwirtschaftlichen Schleppern oder an anderen landwirtschaftlichen Fahrzeugen einzusetzen, die es dem Bediener des Fahrzeugs ermöglichen von seinem Fahrersitz aus einen gewünschten Reifendruck einzustellen, ohne dabei den Fahrersitz zu verlassen oder zu einer stationären Reifendruckbefüllanlage fahren zu müssen. Ähnliche automatische Systeme sind bereits aus der Nutzfahrzeug- und Automobilindustrie bekannt, wobei hier fahrzeuginterne Sensoren von anderen Systemen wie Antiblockiersystemen (ABS) oder elektronischer Schlupfkontrolle (ESP) genutzt werden, um den optimalen Reifendruck einzustellen. Im Gegensatz zu Nutzfahrzeugen und Personenkraftwagen werden landwirtschaftliche Fahrzeuge jedoch von weiteren Faktoren beeinflusst, wie beispielsweise die Beschaffenheit des Untergrunds oder eine arbeitsbedingte Zugkraftbereitstellung, die gesondert betrachtet werden müssen. Diese Faktoren werden durch die oben genannten Systeme nicht erfasst oder berücksichtigt, so dass derartige bekannte Systeme nicht auf landwirtschaftliche Fahrzeuge übertragbar sind.

Die der Erfindung zugrunde liegende Aufgabe wird darin gesehen, ein landwirtschaftliches Fahrzeug der eingangs genannten Art anzugeben, durch welches die vorgenannten Probleme überwunden werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß wird ein landwirtschaftliches Fahrzeug der eingangs genannten Art derart ausgebildet, dass in der elektronischen Steuereinheit eine mathematische Gleichung oder ein Kennfeld abgelegt ist und der Reifendruck anhand des Kennfeldes in Abhängigkeit vom Schlupf regelbar ist. Das landwirtschaftliche Fahrzeug, beispielsweise ein Schlepper bzw. Traktor kann mit einer derart automatisierten Reifendruckregelanlage, unabhängig von den Fähigkeiten des Bedieners, in einen optimalen Betriebszustand gebracht und dort gehalten werden. Dabei wird der Reifendruck abhängig vom Reifenschlupf angepasst. Durch die in der mathematischen Gleichung bzw. im Kennfeld enthaltenen Parameter kann der Reifenschlupf als Regelgröße genutzt werden, bzw. es kann der Reifendruck entsprechend einer Ermittlung bzw. Angabe des Reifenschlupfs und der in der mathematischen Gleichung bzw. im Kennfeld enthaltenen Parameter effizient geregelt werden, um beispielsweise den Wirkungsgrad des Fahrzeugs zu optimieren und Kraftstoff einzusparen. So kann der Schlupf zwischen dem Boden und den Reifen des Traktors bestimmt werden und als Regelgröße für die Einstellung des Reifendrucks durch die elektronische Steuereinheit verwendet werden. Dabei wird der Reifendruck so eingestellt, dass sich in Abhängigkeit der in der mathematischen Gleichung bzw. im Kennfeld hinterlegten Parameter beispielsweise ein für den Wirkungsgrad des Reifen-Boden-Kontakt optimaler Schlupf einstellt. Hier muss der Reifendruck nicht in Bruchteilen von Sekunden angepasst werden kann, sondern es können auch Mittelwerte als Regelgröße verwendet werden, da eine Evakuierung oder ein Befüllen eines Traktorreifens und damit die Regelung des Reifendrucks aufgrund der Größe der Reifen oftmals nur langsam erfolgen kann.

Die Mittel zur Ermittlung oder Angabe des Schlupfes können einen Radarsensor oder auch ein Positionsbestimmungssystem (GPS) umfassen. Der Schlupf kann dann mittels eines für landwirtschaftliche Fahrzeuge (wie beispielsweise Schlepper bzw. Traktoren) üblichen Radarsensors oder mit Hilfe von in der Landwirtschaft üblichen Positionsbestimmungs-Systemen bestimmt und als Regelgröße verwendet werden. Je nachdem wie groß der gerade herrschende Schlupf ist, wird der Reifendruck unter Zugrundelegung des Kennfeldes oder mehrerer Kennfelder erhöht oder verringert, indem Luft in die Reifen zugeführt oder aus ihnen evakuiert wird.

Die Mittel zur Ermittlung oder Angabe des Schlupfes können ferner eine Eingabeeinrichtung umfassen. Die Eingabeeinrichtung kann beispielsweise in der Kabine des Fahrzeugs installiert sein, so dass eine Bedienperson Eingaben machen kann, die der Regelung ebenfalls zu Grunde gelegt werden. Beispielsweise kann die Bedienperson einen Zielschlupfwert vorgeben oder andere Parameter, die über das Kennfeld bei der Regelung berücksichtigt werden sollen, eingeben, beispielsweise auch einen gewünschten Reifendruck als Zieldruckwert (Reifendruck-Sollwert).

Ferner können auch Mittel zur Ermittlung der Fahrgeschwindigkeit oder der Achslasten vorgesehen, beispielsweise Drehzahlsensoren bzw. Kraftsensoren (Drucksensoren, Dehnungsmessstreifen etc.), und der Reifendruck in Abhängigkeit der Fahrgeschwindigkeit bzw. der Achslast am Fahrzeug regelbar sein. So kann anhand der Fahrgeschwindigkeit festgelegt werden, was ein optimaler Reifendruck ist, wenn aufgrund der Fahrgeschwindigkeit Rückschlüsse angestellt werden, die darauf schließen lassen, dass sich das Fahrzeug auf einer Straße oder zumindest nicht im schweren Zugbetrieb oder auf dem Feld befindet. Hier kann der Reifendruck auf den für Transportarbeiten oder eben für Zugarbeiten optimalen Reifendruck als übergeordnete Regelung verändert werden. Ob eine derartige übergeordnete Regelung greifen soll kann beispielsweise durch die Bedienperson über die genannte Eingabeeinrichtung eingegeben werden.

Die mathematische Gleichung bzw. das wenigstens eine Kennfeld kann beispielsweise einen oder mehrere der folgenden Parameter in ihren Variationen berücksichtigen bzw. enthalten: Reifenart, Bodenart, Bodenbeschaffenheit, Geschwindigkeit oder auch eine Achslastverteilung am Fahrzeug. Es kann aber auch ein möglichst allgemeingültiges Kennfeld als Steueralgorithmus in der elektronischen Steuereinheit abgelegt sein, so dass ein bestimmter Schlupfwert oder ein von einer Bedienperson vorgegebener Schlupfwert unter Zugrundelegung konstanter Parameter durch einfache Veränderung des Reifendrucks und ohne Berücksichtigung einer Änderung einer oder mehrerer Parameter eingehalten wird, wobei naturgemäß der Reifendruck abgesenkt wird, wenn der Schlupfwert die Zielgröße überschreitet und umgekehrt. Die Reifendruckregelung kann von der Bedienperson über die Eingabeeinrichtung oder über einen Aktivierungsschalter aktiviert werden, wenn dies gewünscht wird, oder wenn beispielsweise bei voreingestellten Parameter die Betriebsbedingungen entsprechend sind und eine Schlupfregelung sinnvoll erscheint.

Darüber hinaus können jedoch auch Veränderungen und Variationen der oben genannten Parameter in der mathematischen Gleichung bzw. dem wenigstens einen Kennfeld (oder in weiteren Kennfeldern, die in der elektronischen Steuereinheit abgelegt sind) ihren Niederschlag finden, so dass beispielsweise ferner die Reifenart berücksichtigt wird. Dabei kann die Bedienperson entsprechende Vorgaben wie Reifenhersteller, Reifengröße, Reifenbreite, Bauart, Profil, etc. mittels der Eingabeeinrichtung der elektronischen Steuereinheit vorgeben, so dass ein entsprechender, die Reifenart berücksichtigender Algorithmus aufgerufen und der Reifendruckregelung zugrundegelegt wird. So kann ein für die jeweilige Reifenart optimaler Schlupfwert durch variieren des Reifendrucks geregelt werden. Ferner kann auch die Bodenart (bei Bedarf auch zusätzlich) berücksichtigt werden. So kann beispielsweise Sand, Lehm, Gras, Stoppelfeld, etc. als Parametervorgabe berücksichtigt werden, was ebenfalls von der Bedienperson einzugeben wäre, oder auch von einem allgemein bekannten GPS-Kartierungssystem geleistet werden könnte. Entsprechende unterschiedliche Algorithmen zur Regelung des Reifendrucks in Abhängigkeit des Schlupfes für die Fahrt auf Sand sowie für die Fahrt auf Lehm, Gras oder Stoppelfeld, etc. können in der elektronischen Steuereinheit abgelegt sein. Ein weiterer Parameter, der auf die optimale Auswahl des Regelalgorithmus Einfluss haben kann ist die Bodenbeschaffenheit (gelockert, festgefahren, nass, feucht, trocken, etc.). Auch die Bodenbeschaffenheit kann vom Bediener entsprechend vorgegeben werden und bei der Auswahl eines geeigneten Regelalgorithmus bzw. in dem Regelalgorithmus berücksichtigt werden. Ferner kann auch die Fahrgeschwindigkeit als Parameter Berücksichtigung finden. Die Fahrgeschwindigkeit kann dabei über zusätzliche Sensoren ermittelt und an die elektronische Steuereinheit gegeben oder auch aus der Schlupfmessung selbst abgeleitet und an die elektronische Steuereinheit gegeben werden. Des Weiteren kann auch eine Achslastverteilung als Parameter in dem Regelalgorithmus berücksichtigt werden, wobei die Achslast entweder durch zusätzliche Sensoren oder durch die ohnehin vorhandenen Reifenluftdrücke ermittelt werden kann.

Auch andere Daten, die hier nicht weiter genannt werden, jedoch aufgrund der zunehmenden Professionalisierung in der Landwirtschaft über beispielsweise GPS geliefert werden können, oder in Kartierungssystemen aus Ergebnissen von Bodenuntersuchungen hinterlegt wurden, können zusätzlich als Input für den Regelalgorithmus verwendet werden.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:

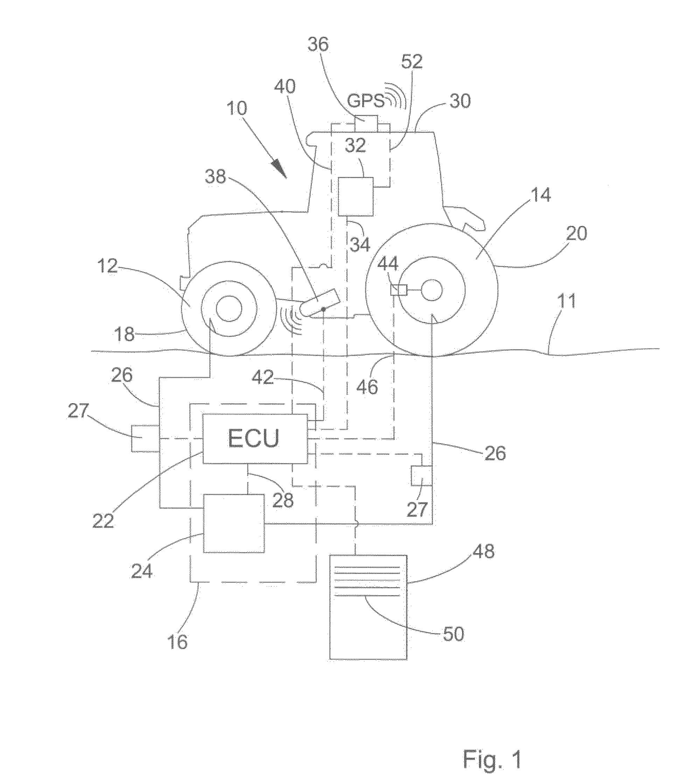

- Fig. 1: ein schematisches Blockschaltbild für ein erfindungsgemäßes landwirtschaftliches Fahrzeug

Die Figur 1 zeigt ein landwirtschaftliches Fahrzeug in Form eines Traktors 10. Es kann sich hierbei auch um ein anderes landwirtschaftliches Fahrzeug handeln, beispielsweise um eine selbstfahrende Feldspritze oder auch um eine Erntemaschine. Der Traktor 10 umfasst Vorderräder 12 sowie Hinterräder 14, über die er sich auf einem Untergrund 11 (Boden, Straße, Feld) abstützt, die mit einer elektro-pneumatischen Reifenbefüllanlage 16 verbunden sind. Die Reifenbefüllanlage 16 dient zum Befüllen oder Entlüften von auf den Rädern 12, 14 angeordneten Reifen 18, 20, wobei die Räder 12, 14 jeweils mit entsprechenden Drehdurchführungen (nicht gezeigt) verbunden sind, die ein Befüllen und Entlüften der Reifen 18, 20 während der Fahrt des Traktors 10 ermöglichen.

Die Reifenbefüllanlage 16 umfasst eine elektronische Steuereinheit 22, sowie eine pneumatische Einrichtung 24, welche alle notwendigen pneumatischen Komponenten einer Reifenbefüllanlage 16 umfassen soll (Kompressor, bzw. pneumatische Pumpe mit Luftspeicher, elektromagnetische Ventil- oder Schalteinrichtungen etc.). Reifenbefüllanlagen 16 sind dem Fachmann aus dem Stand der Technik bekannt und brauchen hier nicht weiter ausgeführt zu werden. Die pneumatische Einrichtung 24 ist über Pneumatikleitungen 26 mit den Rädern 12, 14 verbunden. Ferner sind in der pneumatischen Einrichtung 24 bzw. in den Pneumatikleitungen 26 Drucksensoren 27 vorgesehen, die den Luftdruck in den Reifen 18, 20 erfassen und gegebenenfalls der elektronischen Steuereinheit vorgeben. Die elektronische Steuereinheit 22 ist über eine Steuerleitung 28 mit der pneumatischen Einrichtung 24, bzw. mit den dort angeordneten elektromagnetischen Ventil- oder Schalteinrichtungen, verbunden.

Der Traktor 10 umfasst ferner eine Kabine 30, in der eine Eingabeeinrichtung 32 angeordnet ist, über die eine Bedienperson Angaben zur automatischen Ansteuerung der Reifenbefüllanlage 16 eingeben kann. Die Eingabeeinrichtung 32 ist elektronisch über eine Eingabesteuerleitung 34 oder per Funk mit der elektronischen Steuereinheit 22 verbunden.

Der Traktor 10 umfasst ferner ein Positionsbestimmungssystem 36, beispielsweise ein GPS-System, und/oder einen Radarsensor 38, die jeweils ebenfalls über entsprechende Steuerleitungen 40 bzw. 42, oder auch auf andere bekannte Weise, mit der elektronischen Steuereinheit 22 verbunden sind.

Ferner ist am Hinterrad 14 des Traktors 10 ein Fahrgeschwindigkeitssensor in Form eines Drehzahlsensors 44 vorgesehen, der über eine weitere Steuerleitung 46 mit der elektronischen Steuereinheit 22 verbunden ist.

Des Weiteren umfasst die elektronische Steuereinheit 22 ein Speichermodul 48, im welchen ein oder mehrere Kennfelder 50 abgelegt sind, die zur Generierung von Steuersignalen zur Ansteuerung der elektromagnetischen Ventile in der pneumatischen Einrichtung 24 der Reifenbefüllanlage 16 herangezogen werden.

Der Traktor 10 stützt sich über die mit einem bestimmten Luftdruck befüllten Reifen 18, 20 auf einem Untergrund (wie beispielsweise Gras, Stoppelfeld, Ackerboden, Sand, Lehm, Straße etc.) ab, wobei bei einem Fortbewegen des Traktors 10 über den Untergrund sich zwischen Reifen 18, 20 und Untergrund ein Schlupf bzw. ein Schlupfwert einstellt. Der Schlupfwert wird mithilfe des Positionsbestimmungssystems 36 oder des Radarsensors 38 in Verbindung mit der über den Drehzahlsensor 44 ermittelten Drehzahl der Räder 14 ermittelt, wobei erstere eine im wesentlichen tatsächliche Geschwindigkeit des Traktors 10 messen bzw. ermitteln und über die Drehzahl der Räder 14 und deren geometrischen Abmessungen eine mit Schlupf behaftete Geschwindigkeit des Traktors 10 gemessen bzw. ermittelt wird. Die Differenz bzw. das Verhältnis beider Geschwindigkeiten lässt im Wesentlichen direkt auf den Schlupfwert schließen, der zur Ansteuerung der Reifenbefüllanlage 16 und damit zur Regelung des Reifendrucks herangezogen wird.

Der Reifendruck kann nun entweder nur in Abhängigkeit des Schlupfes geregelt werden, dass heißt durch ein allgemein gültiges Kennfeld 50, bzw. durch einn vorgegeben mathematischen bzw. physikalischen Zusammenhang, der verschiedene konstant angenommene Parameter berücksichtigt wie, Reifenart, Bodenart, Bodenbeschaffenheit, Geschwindigkeit oder auch eine Achslastverteilung am Fahrzeug. Über die Eingabeeinrichtung 32 ist es dann möglich, die Reifendruckregelung zu aktivieren bzw. zu deaktivieren, wenn dies erwünscht ist. So kann beispielsweise ein allgemeingültiges Kennfeld 50 für den Feldbetrieb erstellt worden sein oder auch für die Fahrt auf der Straße. Sollte der Betriebszustand nicht den Bedingungen des allgemeingültigen Kennfeldes entsprechen, dann kann die Reifendruckregelung entsprechend abgeschaltet werden.

Darüber hinaus können auch Veränderungen und Variationen der oben genannten Parameter in dem wenigstens einen Kennfeld 50 (oder in weiteren Kennfeldern, die in der elektronischen Steuereinheit 22 abgelegt sind) ihren Niederschlag finden, so dass beispielsweise ferner die Reifenart berücksichtigt wird. Dabei kann die Bedienperson entsprechende Vorgaben wie Reifenhersteller, Reifengröße, Reifenbreite, Bauart, Profil, etc. mittels der Eingabeeinrichtung 32 der elektronischen Steuereinheit 22 vorgeben, so dass ein entsprechender, die Reifenart berücksichtigender Algorithmus aufgerufen und der Reifendruckregelung zugrundegelegt wird. So kann ein für die jeweilige Reifenart optimaler Schlupfwert durch Variieren des Reifendrucks geregelt werden.

Ferner kann auch die Bodenart (bei Bedarf auch zusätzlich) berücksichtigt werden. So kann beispielsweise Sand, Lehm, Gras, Stoppelfeld, etc. als Parametervorgabe über die Eingabeeinrichtung 32 von der Bedienperson berücksichtigt werden. Ferner ist es möglich, dass in der Eingabeeinrichtung 32 ein inzwischen in der Landwirtschaft etabliertes GPS-Kartierungssystem integriert ist und die genannten Parameter über eine elektronische Verbindung 52 im Zusammenspiel mit dem Positionsbestimmungssystem 36 automatisch vorgegeben werden. Beispielsweise sind unterschiedliche Algorithmen zur Regelung des Reifendrucks in Abhängigkeit des Schlupfes für die Fahrt auf Sand sowie für die Fahrt auf Lehm, Gras oder Stoppelfeld, etc. in der elektronischen Steuereinheit abgelegt.

Ein weiterer Parameter, der auf die optimale Auswahl des Regelalgorithmus Einfluss haben kann ist die Bodenbeschaffenheit (gelockert, festgefahren, nass, feucht, trocken, etc.). So ist auch dies in separaten Kennfeldern 50 in der Steuereinheit 22 als Algorithmus abgelegt, so dass die Bodenbeschaffenheit als Variable vom Bediener entsprechend vorgegeben werden kann.

Ferner kann auch die Fahrgeschwindigkeit als Parameter Berücksichtigung finden. Die Fahrgeschwindigkeit wird dabei über den Drehzahlsensor 44 oder über den Radarsensor 38 oder auch über das Positionsbestimmungssystem 36 laufend ermittelt und an die Steuereinheit 22 gegeben. Es ist auch vorgesehen, dass die Reifendruckregelung nur dann vorgenommen wird, wenn die Fahrgeschwindigkeit für einen gewissen Zeitraum über oder unter einen gewissen wert liegt, wodurch dann ein Übergang von Feldarbeit auf Fahrt auf der Straße, oder umgekehrt, angenommen und der Reifendruck entsprechend festeingestellter Werte oder durch den Bediener über die Eingabeeinrichtung 32 einstellbarer Werte angepasst wird.

Des Weiteren kann auch eine Achslastverteilung als Parameter in dem Regelalgorithmus über entsprechende Kennfelder berücksichtigt werden, wobei die Achslast entweder durch zusätzliche Sensoren (nicht gezeigt) oder durch die ohnehin vorhandenen Reifenluftdrücke über die Drucksensoren 27 ermittelt und der elektronischen Steuereinheit vorgegeben werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Landwirtschaftliches Fahrzeug (10) mit einer elektro-pneumatischen Reifendruckregelanlage (16), wobei die Reifendruckregelanlage (16) eine elektronische Steuereinheit (22) zur Regelung eines Reifendrucks und Mittel zur Ermittlung oder Angabe des Schlupfes zwischen Boden (11) und Reifen (18, 20) des Fahrzeugs (10) umfasst, **dadurch gekennzeichnet, dass** in der elektronischen Steuereinheit (22) eine mathematische Gleichung oder ein Kennfeld (50) abgelegt ist und der Reifendruck anhand der mathematischen Gleichung oder des Kennfeldes (50) in Abhängigkeit vom Schlupf regelbar ist.

2. Landwirtschaftliches Fahrzeug (10) nach Anspruch 1, **dadurch gekennzeichnet, dass** die Mittel zur Ermittlung oder Angabe des Schlupfes einen Radarsensor (38) umfassen.

3. Landwirtschaftliches Fahrzeug (10) nach Anspruch 1 oder 2, **dadurch gekennzeichnet, dass** die Mittel zur Ermittlung oder Angabe des Schlupfes ein Positionsbestimmungssystem (36) (GPS) umfassen.

4. Landwirtschaftliches Fahrzeug (10) nach einem der Ansprüche 1 bis 3, **dadurch gekennzeichnet, dass** die Mittel zur Ermittlung oder Angabe des Schlupfes eine Eingabeeinrichtung (32) umfassen.

5. Landwirtschaftliches Fahrzeug (10) nach einem der Ansprüche 1 bis 4, **dadurch gekennzeichnet, dass** Mittel (44, 27) zur Ermittlung der Fahrgeschwindigkeit oder der Achslast vorgesehen sind und der Reifendruck in Abhängigkeit der Fahrgeschwindigkeit bzw. der Achslast regelbar ist.

6. Landwirtschaftliches Fahrzeug (10) nach einem der Ansprüche 1 bis 5, **dadurch gekennzeichnet, dass** in der mathematischen Gleichung oder dem wenigsten einen Kennfeld (50) ein oder mehrere der folgenden Parameter berücksichtig werden bzw. enthalten sind:
- Reifenart
- Bodenart
- Bodenbeschaffenheit
- Geschwindigkeit
- Achslastverteilung
